# EUROPÄISCHE PATENTANMELDUNG

(11) **EP 2 676 785 A1**
(43) Veröffentlichungstag der Anmeldung: **25.12.2013**
(21) Anmeldenummer: 13003118.0
(22) Anmeldetag: 19.06.2013
(51) Int. Cl.: B29C 47/34, B65G 47/248, B29C 47/08, B29C 47/92, B29C 47/90

(54) **Abzugs- und Wendevorrichtung für stranggepresste Kunststoffprofile**

(30) Priorität: 20.06.2012 DE 202012005944 U
(71) Anmelder: Stein Maschinenbau GmbH & Co. KG, 66999 Hinterweidenthal (DE)
(72) Erfinder: Stein, Fritz, 66999 Hinterweidenthal (DE)
(74) Vertreter: Patentanwälte Dr. Keller, Schwertfeger

(57) **Zusammenfassung**

Die Erfindung betrifft Abzugsvorrichtung für stranggepressre Kunststoffprofile (25), insbesondere Fensterprofile, mit einer an einem Grundrahmen (5) befestigten Abzugseinheit (2). Die Abzugseinheit (2)besitzt mindestens zwei das Kunststoffprofil (25) der Länge nach zwischen sich erfassenden, gegenläufig umlaufenden Abzugsaggregaten (16,17), um eine in Richtung der Längsachse (6) des Kunststoffprofils (25) wirkende Abzugskraft auf das Kunststoffprofil (25) aufzubringen. Um das die Extruderdüse verlassende Kunststoffprofil (25) je nach Situation stets von der glatten Ober-bzw. Unterseite des Kunststoffprofils (25) fassen zu können, wird gemäß der Erfindung vorgeschlagen, dass die Abzugseinheit (2) um eine zur Abtugsrichtung parallelen Achse (6) drehbar am Grundrahmen (5) befestigt ist.

## Beschreibung

Die Erfindung betrifft eine Abzugsvorrichtung für stranggepresste Kunststoffprofile gemäß dem Oberbegriff des Patentanspruchs 1.

Eine gebräuchliche Art der Herstellung von Kunststoffprofilen ist das Extrudieren, wobei die im Extruder in plastischer Konsistenz vorliegende Kunststoffmasse durch eine Profildüse gepresst und der die Profildüse verlassende Endlosprofilstrang zur Abkühlung und Maßhaltigkeit durch eine Kalibriervorrichtung geführt wird. Den Vorschub des Profilstrangs durch die Kalibriereinrichtung besorgt eine an die Kalibriereinrichtung anschließende Abzugsvorrichtung, von deren Funktion die Qualität und Gleichmäßigkeit des fertigen Kunststoffprofils maßgeblich abhängt. Zur Erzeugung der Vorschubkraft besitzen bekannte Abzugsvorrichtungen gegenläufige Fördereinheiten, die den Profilstrang der Länge nach von gegenüberliegenden Seiten her ergreifen und aus der Kalibriereinrichtung ziehen.

Eine solche Abzugsvorrichtung ist beispielsweise aus der DE 199 37 691 A1 bekannt, deren Abzugseinheit obere und untere Abzugsbänder aufweist, zwischen denen das Kunststoffprofil klemmend erfasst und im Zuge gegenläufiger Rotation in Abzugsrichtung gezogen wird. Für eine sichere Kraftübertragung findet der Kraftschluss zwischen Abzugseinheit und Kunststoffprofil an den sich gegenüberliegenden planen Ober- und Unterseite des Kunststoffprofils statt, um auf diese Weise die größtmögliche Kontaktfläche für die Kraftübertragung zur Verfügung zu stellen. Da jedoch beim Extrusionsprozess naturgemäß die Oberseite eines Kunststoffprofils eine höhere Qualität aufweist als die Unterseite, führt eine derartiger Herstellungsprozess zu einem Kunststoffprofil mit qualitativ unterschiedlichen Oberflächen, wobei in der Regel die qualitativ schlechtere Unterseite als störend wahrgenommen wird.

Vor diesem Hintergrund besteht die Aufgabe der Erfindung darin, eine Abzugsvorrichtung zu schaffen, die es erlaubt, ein Kunststoffprofil mit qualitativ gleichwertigen Außenseiten möglichst effektiv in Abzugsrichtung zu ziehen.

Diese Aufgabe wird durch eine Abzugsvorrichtung mit den Merkmalen des Patentanspruchs 1 gelöst.

Vorteilhafte Ausführungsformen ergeben sich aus den Unteransprüchen.

Die Erfindung geht von der Erkenntnis aus, dass bei der Extrusion eines Kunststoffprofils in einer Lage, bei der die später sichtbaren Außenseiten weder die Oberseite noch die Unterseite, sondern die seitlichen Flächen des die Düse verlassenden Profilstranges bilden, weder die eine noch die andere Außenfläche eine höhere Qualität aufweist. Gegenüber dem eingangs beschriebenen Stand der Technik ist bei dieser Vorgehensweise also das Kunststoffprofil beim Verlassen der Extruderdüse um 90° um seine Längsachse gedreht. Dies führt allerdings bei unregelmäßigen Profilquerschnitten wie z.B. bei Fensterprofilen dazu, dass die Krafteinleitung von der Abzugsvorrichtung in das Kunststoffprofil über die unregelmäßig geformten Profilseite erfolgt, da die Abzugsbänder oberhalb und unterhalb des Profilstrangs angeordnet sind. Ein sicherer Kraftschluss zum Profilstrang kann dabei nur mit zusätzlichem Aufwand wie zum Beispiel dem Anbringen komplementär geformter Stollen an der Abzugseinheit hergestellt werden.

Darauf aufbauend besteht der Grundgedanke der Erfindung darin, die Abzugseinheit einer Abzugsvorrichtung um eine zur Abzugsrichtung parallele Achse drehbar auszubilden. Dadurch kann die Abzugseinheit von einer ersten Betriebsstellung, in der aufrecht stehende Kunststoffprofile den Extruder verlassen, in eine zweite um 90° gedrehte Betriebsstellung gebracht werden, in der liegende Kunststoffprofile gezogen werden. Auf diese Weise gelingt es, Kunststoffprofile unabhängig von einer aufrechten oder liegenden Lage an ihren planen seitlichen Flächen in optimalen Reibschluss mit der Abzugseinheit zu bringen, um auf diese Weise die Abzugskraft sicher in das Kunststoffprofil einzuleiten.

Vorteilhafterweise wird die Drehbewegung durch sich axial gegenüberliegende Drehkränze erreicht, an denen die Abzugseinheit mit ihren Enden befestigt ist. Auf diese Weise ist es möglich allein durch Rotation der Drehkränze die Abzugseinheit ohne großen Aufwand und in kürzester Zeit auf das jeweils zu extrudierende Kunststoffprofil einzustellen.

In vorteilhafter Weiterbildung der Erfindung sind die Drehkränze in horizontaler Richtung verstellbar ausgebildet, um einen etwaigen Mittenversatz der Abzugseinheit im Zuge der Umstellung von einer Betriebsstellung in die andere ausgleichen zu können. Vorzugsweise sind dazu die Drehkränze auf horizontalen, quer zur Längsachse des Kunststoffprofils ausgerichteten Linearführungen verschieblich angeordnet.

Die Drehbewegung kann in einer einfachen Ausführungsform der Erfindung manuell erzeugt werden. Bevorzugt ist jedoch der Einsatz eines motorischen Antriebs, um die Funktionsabläufe weitestgehend automatisieren zu können. In Weiterbildung dieses Gedankens ist der Antrieb in einen der Drehkränze oder beide Drehkränze integriert. Dazu kann beispielsweise entlang des Innenumfangs des drehbaren Innenrings oder Außenumfang des feststehenden Außenrings des Drehkranzes ein Zahnkranz angeordnet sein, mit dem das Antriebsritzel eines Motors in Eingriff steht. Vorzugsweise sind beide Drehkränze angetrieben, was über eine gemeinsame Antriebswelle geschehen kann, an deren Enden jeweils ein Antriebsritzel sitzt. Durch die Verknüpfung von Antrieb und Drehlagerung ist ein äußerst kompakter Maschinenaufbau möglich.

Zur Entlastung des Drehantriebs in den beiden Betriebsstellungen kann eine Feststelleinrichtung vorgesehen sein, die die Abzugseinheit in ihrer relativen Lage gegenüber dem Grundrahmen fixiert, beispielsweise durch Erzeugung einer Klemmkraft mittels einer oder mehreren Feststellschrauben oder durch Verriegelung gegenüber einem am Grundrahmen angeordneten Anschlag in der jeweiligen Betriebsstellung. Dabei kann ein federbelasteter Riegel in eine entsprechende Riegelrast eingreifen.

Um die Abzugsvorrichtung auf unterschiedliche Kunststoffprofile einstellen zu können, aber auch um die Zugänglichkeit zum Raum zwischen den Abzugsaggregaten zu gewährleisten, ist gemäß einer vorteilhaften Weiterbildung der Erfindung vorgesehen, den gegenseitigen Abstand der Abzugsaggregate mit Hilfe von Zylinderkolbeneinheiten verändern zu können. Vorteilhafterweise stützen sich die Zylinderkolbeneinheiten zu diesem Zweck an den beiden Abzugsaggregaten ab, so dass diese im Zuge des Drehens der Abzugseinheit mit dieser mitgedreht werden.

Vorzugsweise sind die Abzugsaggregate von Rollen, Bändern oder Raupen gebildet, da durch die Wahl der Anzahl der eingesetzten Rollen oder die Länge der Bänder oder Raupen auf einfache Weise die Abzugskraft bestimmt werden kann, ohne den Anpressdruck auf das Kunststoffprofil erhöhen zu müssen.

Befindet sich die Abzugseinheit in einem Betriebszustand mit vertikalen Kontaktflächen zum Kunststoffprofil, so geht die Lagerwirkung durch die ansonsten vom unteren Abzugsaggregat zur Verfügung gestellte horizontale Kontaktfläche verloren. In diesem Fall kann es sich als vorteilhaft erweisen, das Kunststoffprofil im Bereich der Abzugseinheit mit einem schienenförmigen Unterstützungselement abzustützen, auf dem das Kunststoffprofil gleitet.

Die Erfindung wird nachstehend anhand eines in den Zeichnungen dargestellten Ausführungsbeispiels näher erläutert, wobei zusätzliche Merkmale und Vorteile der Erfindung offenbar werden.

Es zeigen
- Fig. 1: einen Querschnitt durch eine erfindungsgemäße Abzugsvorrichtung in einer ersten Betriebsstellung mit horizontal ausgerichteten Abzugsaggregaten,
- Fig. 2: eine Draufsicht auf die in Fig. 1 dargestellte Abzugsvorrichtung,
- Fig. 3: einen Querschnitt durch die in Fig. 1 und 2 dargestellte Vorrichtung in einer zweiten Betriebsstellung mit vertikal ausgerichteten Abzugsaggregaten und
- Fig. 4: eine Draufsicht auf die in Fig. 3 dargestellte Abzugsvorrichtung.

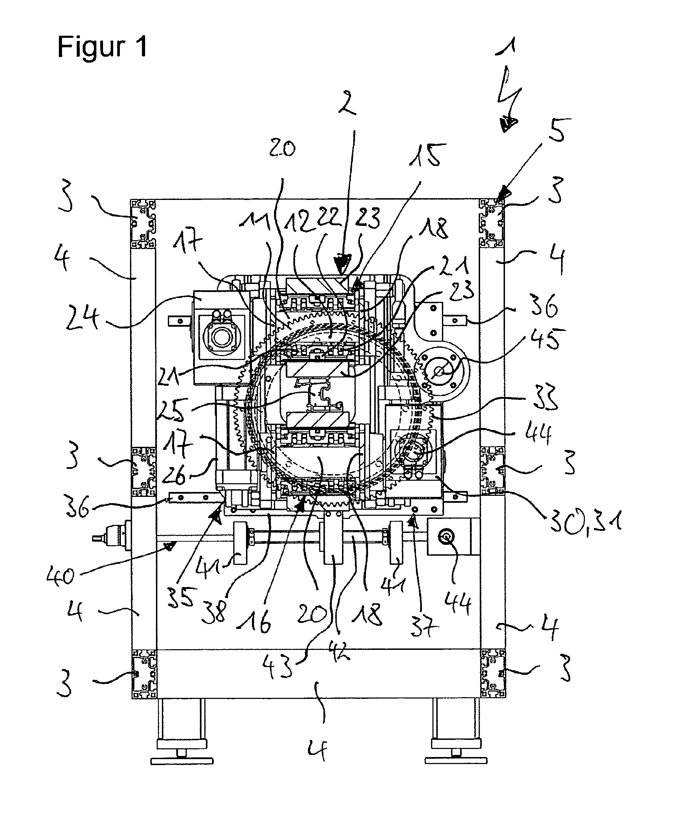

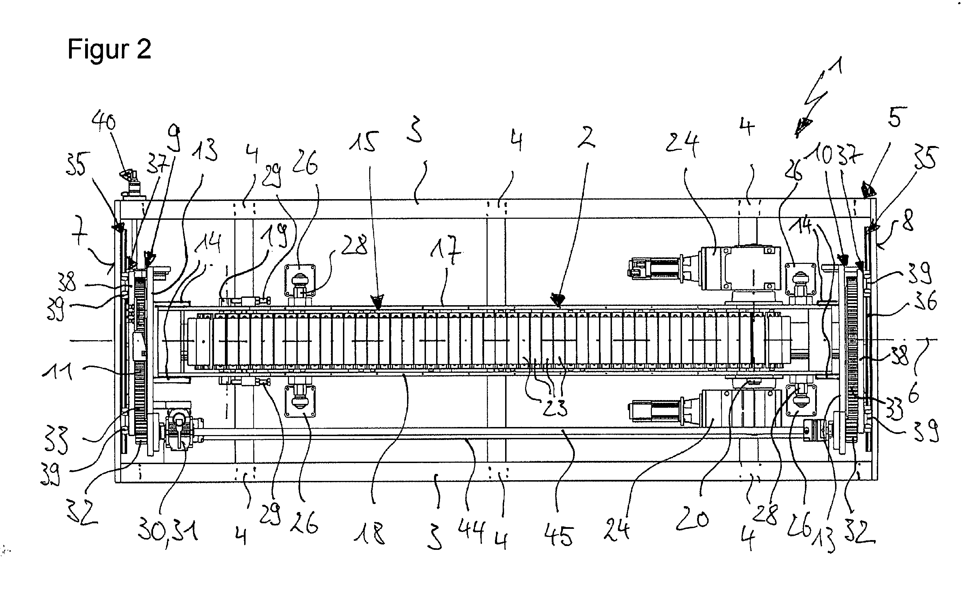

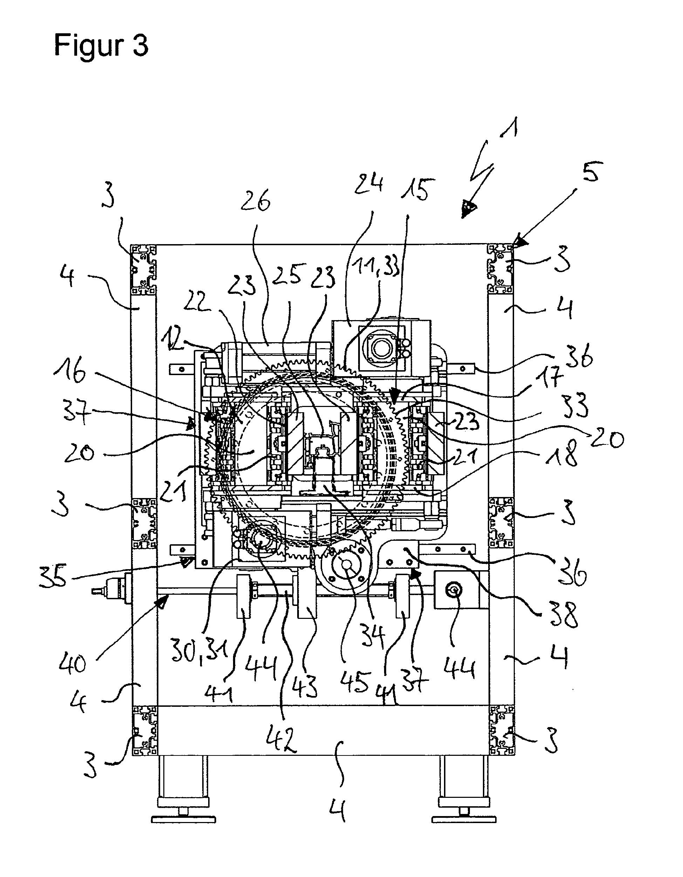

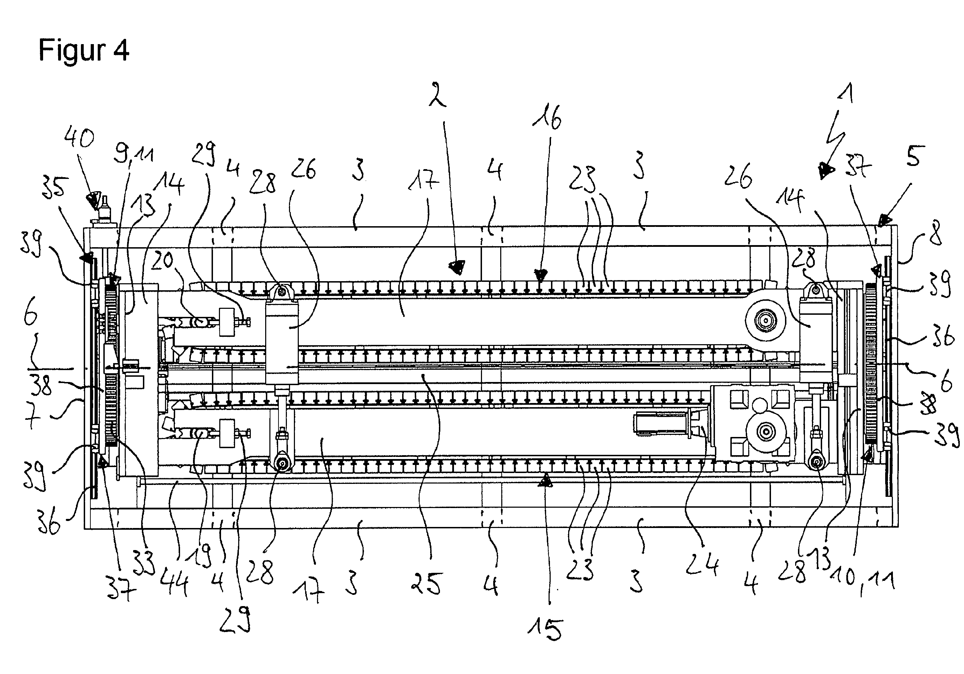

Die Figuren 1 bis 4 zeigen eine erfindungsgemäße Abzugsvorrichtung 1 in unterschiedlichen Schnitten und Ansichten, wobei sich der in den Figuren 1 und 2 dargestellte Betriebszustand vom Betriebszustand gemäß der Figuren 3 und 4 dadurch unterscheidet, dass die Abzugseinheit 2 der Abzugsvorrichtung 1 um einen Winkel von 90° um ihre Längsachse 6 gedreht ist; ansonsten besteht Übereinstimmung.

Die Abzugsvorrichtung 1 besitzt einen von Längsträgern 3 und Querträgern 4 gebildeten Grundrahmen 5, der die Tragkonstruktion für eine entlang einer Längsachse 6 verlaufenden Abzugseinheit 2 darstellt. An den sich gegenüberliegenden Seiten der sich gegenüberliegenden Stirnwände 7 und 8 des Grundrahmens 3 ist jeweils eine Linearführung 35 befestigt. Beide Linearführungen 35 umfassen jeweils zwei feststehende horizontale Führungsschienen 36, die als Lager für einen verschieblichen Wagen 37 dienen, der aus einer Grundplatte 38 und mit den Schienen 36 zusammenwirkenden Läufern 39 gebildet ist. Jede Grundplatte 38 trägt jeweils ein Drehkranz 9, 10, wobei die gemeinsame Drehachse der Drehkränze 9, 10 mit der Längsachse 6 zusammenfällt.

Im Bereich der Stirnwand 7 sieht man einen ersten Spindeltrieb 40, dessen in ortsfesten Wellenlagern 41 aufgenommene Antriebsspindel 42 einen am Wagen 37 angelenkten Mitnehmer 43 aufweist. Durch Betätigung des Spindeltriebs 40 kann der Wagen 37 in horizontaler Richtung verfahren werden. Der Antrieb des Wagens 37 im Bereich der Stirnwand 8 erfolgt über einen entsprechenden zweiten Spindeltrieb, der über eine mit dem ersten Spindeltrieb 40 gekoppelte Welle 44 angetrieben ist. Dadurch ist die Synchronisation der Querbewegung der beiden Drehkränze 9, 10 gewährleistet.

Die Drehkränze 9, 10 weisen jeweils einen starr mit dem Wagen 37 verbundenen Außenring 11 und einen demgegenüber um die Achse 6 drehbaren Innenring 12 auf. Außenring 11 und Innenring 12 sind über Wälzkörper drehbar miteinander verbunden. Der Innenring 12 trägt eine Montageplatte 13, die auf ihrer zur Vorrichtungsmitte weisenden Seite Anschlussprofile 14 zur kraftschlüssigen Aufnahme der Abzugseinheit 2 aufweist.

Die Abzugseinheit 2 besteht im Wesentlichen aus einem oberen Abzugsaggregat 15 und einem dazu parallel verlaufenden unteren Abzugsaggregat 16, die, wie aus den Figuren 1 und 2 ersichtlich, in vertikalem Abstand zueinander angeordnet sind. Jedes Abzugsaggregat 15, 16 besitzt zwei seitlich beabstandete planparallel zueinander verlaufende Wangenlängsträger 17, 18, deren Enden jeweils mit den an den stirnseitigen Montageplatten 13 angeordneten Anschlussprofilen 14 verbunden sind. Mit ihren jeweils paarweise nebeneinanderliegenden Enden nehmen die Wangenlängsträger 17, 18 jeweils zwischen sich eine Umlenkrolle 19, 20 auf, von denen jede über ihren Umfang mit zwei seitlich beabstandeten Zahnkränzen besetzt ist. Über die Zahnkränze der beiden Umlenkrollen 19, 20 ist jeweils eine Endloskette 21 geführt. Die beiden auf diese Weise parallel laufenden Endlosketten 21 eines Abzugsaggregats 15, 16 sind über eine Vielzahl quer zur Achse 6 nebeneinander angeordneter Stollenhalter 22 verbunden, von denen jeder jeweils einen Stollen 23 aufnimmt. Die Oberseite der Stollen 23 bildet die Kontaktseite zu dem zu fördernden Kunststoffprofil 25.

Für den Antrieb der Abzugseinheit 2 ist jedem Abzugsaggregat 15, 16 ein Motor 24 zugeordnet, der fest an der Außenseite der Wangenlängsträger 17 angeflanscht ist. Die beiden Motoren 24 sind miteinander synchronisiert und versetzen die die Endlosketten 21 antreibenden Umlenkrollen 20 des oberen Abzugsaggregats 15 und unteren Abzugsaggregat 16 in gegenläufige Rotation.

Durch den lichten Abstand zwischen den Stollen 23 des oberen Abzugsaggregats 15 und den Stollen 23 des unteren Abzugsaggregats 16 wird ein Raum gebildet, in welchem ein Profilstrang 25 erfasst und im Zuge der Umlaufbewegung der Abzugsaggregate 15, 16 von den Stollen 23 in Richtung der Längsachse 6 gezogen wird. Um diesen Abstand einstellen zu können, erstrecken sich paarweise zu beiden Seiten der Abzugsaggregate 15, 16 Zylinderkolbeneinheiten 26, die sich an Lagern 27 am unteren Abzugsaggregat 16 abstützen und mit ihrem beweglichen Kolben auf Achsen 28 einwirken, die das obere Abzugsaggregat 15 tragen. Durch entsprechende Ansteuerung der Zylinderkolbeneinheiten 26 kann auf diese Weise der Abstand des oberen Abzugsaggregats 15 zum unteren Abzugsaggregat 16 eingestellt werden.

Ferner sieht man an dem in der Darstellungsebene linken Ende des oberen Abzugsaggregats 15 und unteren Abzugsaggregat 16 jeweils eine Spannvorrichtung 29, mit der sich der axiale Abstand der beiden Umlenkrollen 19 und 20 einstellen lässt, um im Bedarfsfall die Spannung der Endlosketten 21 verändern zu können.

Somit ist die Abzugseinheit 2 mit ihrem oberen Abzugsaggregat 15 und unteren Abzugsaggregat 16 sowie allen peripheren Komponenten wie Antriebe 24, Zylinderkolbeneinheiten 26, Spannvorrichtung 29 und dergleichen über die Montageplatten 13 an den beiden Drehkränzen 9 und 10 gelagert, so dass allein durch definierte Drehung der Drehkränze 9 und 10 die komplette Abzugseinheit 2 um die Achse 6 verdrehbar ist, um zwischen einer ersten stationären Betriebsstellung und einer zweiten stationären Betriebsstellung wechseln zu können.

Zur Ausführung einer solchen Drehbewegung, beispielsweise wenn die Abzugsvorrichtung 1 von einer ersten Betriebsstellung gemäß der Figuren 1 und 2 in eine zweite Betriebsstellung gemäß der Figuren 3 und 4 gebracht werden soll, sorgt ein auf die Drehkränze 9, 10 einwirkender Antrieb. Der Antrieb umfasst einen am drehbaren Innenring 12 des Drehkranzes 9 befestigten, elektronisch gesteuerten Elektromotor 30 mit angeschlossenem Getriebe 31, das wiederum ein Antriebsritzel 32 antreibt. Das Antriebsritzel 32 wirkt mit einem Zahnkranz 33 zusammen, der den feststehenden Außenring 11 des zugeordneten Drehkranzes 9 umläuft, so dass durch Aktivierung des Elektromotors 30 eine Drehbewegung des Drehkranzes 9 initiiert wird. Diese Drehbewegung wird synchron über eine sich achsparallel zur Achse 6 erstreckende Antriebswelle 45 auf den Drehkranz 10 übertragen, dessen am feststehenden Außenring 11 umlaufender Zahnkranz 33 mit einem endseitig an der Welle 45 angeordneten und am drehbaren Innenring 12 gelagerten Antriebsritzel 32 zusammenwirkt.

Nach Ausführung einer Drehbewegung um 90° nimmt die Abzugseinheit 2 die in den Figuren 3 und 4 dargestellte Position innerhalb der Abzugsvorrichtung 1 ein, bei der die Stollen 23 vertikal ausgerichtet sind. Zwischen den Stollen 23 des oberen Abzugsaggregats 15 und unteren Abzugsaggregats 16 sieht man zudem einen ebenfalls um 90° gedrehten Profilstrang 25, dessen flache Seiten den Stollen 23 zugewandt sind, während die unregelmäßigen Profilseiten nach oben und unten weisen. Der Profilstrang 25 kann über die gesamte Länge der Abzugseinheit 2 von einem achsparallelen Unterstützungselement 34 geführt und getragen sein.

## Patentansprüche

1. Abzugsvorrichtung für stranggepresste Kunststoffprofile (25), insbesondere Fensterprofile, mit einer an einem Grundrahmen (5) befestigten Abzugseinheit (2) mit mindestens zwei das Kunststoffprofil (25) der Länge nach zwischen sich erfassenden, gegenläufig umlaufenden Abzugsaggregaten (16, 17) zur Aufbringung einer in Richtung der Längsachse (6) des Kunststoffprofils (25) wirkenden Abzugskraft, **dadurch gekennzeichnet, dass** die Abzugseinheit (2) um eine zur Abzugsrichtung parallelen Achse (6) drehbar am Grundrahmen (5) befestigt ist.

2. Abzugsvorrichtung nach Anspruch 1, **dadurch gekennzeichnet, dass** zur drehbaren Befestigung der Abzugseinheit (2) am Grundrahmen (5) ein erster Drehkranz (9) und ein zweiter Drehkranz (10) axial beabstandet angeordnet sind, deren gemeinsame Drehachse (6) parallel zur Abzugsrichtung verläuft, wobei die in Abzugsrichtung ersten Enden der Abzugsaggregate (15, 16) am rotierbaren Innenring (12) des ersten Drehkranzes (9) befestigt sind und die in Abzugsrichtung gegenüberliegenden zweiten Enden der Abzugsaggregate (15, 16) am rotierbaren Innenring (12) des zweiten Drehkranzes (10).

3. Abzugsvorrichtung nach Anspruch 1 oder 2, **dadurch gekennzeichnet, dass** der erste Drehkranz (9) und/oder zweite Drehkranz (10) mit einem Antrieb zur Ausführung einer Drehbewegung gekoppelt ist.

4. Abzugsvorrichtung nach Anspruch 3, **dadurch gekennzeichnet, dass** der Antrieb einen Zahnkranz (33) am rotierbaren Innenring oder feststehenden Außenrings des ersten Drehkranzes (9) und/oder zweiten Drehkranzes (10) umfasst, der mit einem angetriebenen Ritzel (32) zusammenwirkt.

5. Abzugsvorrichtung nach Anspruch 3 oder 4, **dadurch gekennzeichnet, dass** der Antrieb einen elektronisch gesteuerten Getriebemotor (30) umfasst, der das Ritzel (32) antreibt.

6. Abzugsvorrichtung nach einem der Ansprüche 3 bis 5, **gekennzeichnet durch** Mittel zur Synchronisation der Drehbewegung des ersten Drehkranzes (9) mit der Drehbewegung des zweiten Drehkranzes (10).

7. Abzugsvorrichtung nach einem der Ansprüche 1 bis 6, **gekennzeichnet durch** eine Feststelleinrichtung, mit der die Abzugseinheit (2) nach ausgeführter Drehung gegenüber dem Grundrahmen (5) feststellbar ist.

8. Abzugsvorrichtung nach einem der Ansprüche 1 bis 7, **dadurch gekennzeichnet, dass** zumindest eines der Abzugsaggregate (15, 16) quer zur Abzugsrichtung einstellbar ist, um den gegenseitigen Abstand der beiden Abzugsaggregate (15, 16) verändern zu können.

9. Abzugsvorrichtung nach einem der Ansprüche 1 bis 8, **dadurch gekennzeichnet, dass** die Abzugsaggregate (15, 16) von Rollen, Bändern oder Raupen gebildet sind.

10. Abzugsvorrichtung nach einem der Ansprüche 1 bis 9, **dadurch gekennzeichnet, dass** die Abzugsaggregate (15, 16) synchron angetrieben sind.

11. Abzugsvorrichtung nach einem der Ansprüche 1 bis 10, **gekennzeichnet durch** ein zur Abzugsrichtung parallel zwischen den Abzugsaggregaten (15, 16) angeordnetes Unterstützungselement (34) für das Kunststoffprofil (25).

12. Abzugsvorrichtung nach einem der Ansprüche 1 bis 11, **dadurch gekennzeichnet, dass** die Drehkränze (9, 10) quer zur Längsachse (6) der Abzugsvorrichtung (1) verstellbar sind, vorzugsweise zum Ausgleich eines Mittenversatzes infolge eines Wechsels von der ersten Betriebsstellung in die zweite Betriebsstellung der Abzugseinheit (2).

13. Abzugsvorrichtung nach Anspruch 12, **dadurch gekennzeichnet, dass** an den Drehkränzen), 10) jeweils eine Linearführung angeordnet ist, an der die Abzugseinheit (2) endseitig befestigt ist.

14. Abzugsvorrichtung nach Anspruch 12 oder 13, **gekennzeichnet durch** Mittel zum Verstellen der Drehkränze (9, 10) quer zur Längsachse (6).

15. Abzugsvorrichtung nach Anspruch 14, **dadurch gekennzeichnet, dass** die Mittel mindestens einen Spindeltrieb (40) umfassen, vorzugsweise einen ersten Spindeltriebe (40), der dem ersten Drehkranz (9) zugeordnet ist und einem zweiten Spindeltrieb, der dem zweiten Drehkranz (10) zugeordnet ist, wobei der erste Spindeltrieb (40) und der zweite Spindeltrieb synchronisiert sind.
